# EUROPÄISCHE PATENTANMELDUNG

(11) **EP 4 800 374 A1**
(43) Veröffentlichungstag der Anmeldung: **02.09.2026**
(21) Anmeldenummer: 25160388.2
(22) Anmeldetag: 26.02.2025
(51) Int. Cl.: G01N 21/25, G01N 35/04, G01N 21/64

(54) **LABORAUTOMAT UND VERFAHREN ZUR BEARBEITUNG EINER PROBE**

(71) Anmelder: Hombrechtikon Systems Engineering AG, 8634 Hombrechtikon (CH)
(72) Erfinder: Lutze, Konstantin, 8713 Uerikon (CH); Quintel, Harald Dr., 8266 Steckborn (CH)
(74) Vertreter: IPS Irsch AG

(57) **Zusammenfassung**

Offenbart wird ein Laborautomat zur Bearbeitung einer Probe (70) umfassend einen Behandlungsraum (10) zur Bearbeitung der Probe (70), ein in dem Behandlungsraum (10) angeordnetes Probenaufnahmeelement (7) zur Aufnahme der Probe (70); und eine Beleuchtungseinheit (11). Das Probenaufnahmeelement (7) ist an der Beleuchtungseinheit (11) zur Bestrahlung der Probe (70) mit einer Primärstrahlung anordenbar.

Eine in dem Behandlungsraum (10) angeordnete Analyseeinheit (5) zur Analyse der Probe (70), wobei die Analyse durch Aufnahme einer von der Probe (70) stammenden und durch die Primärstrahlung induzierten Sekundärstrahlung in dem Behandlungsraum (10) erfolgt.

In dem Laborautomat (1) kann das Probenaufnahmeelement (7) zumindest teilweise derart über der Beleuchtungseinheit (11) angeordnet werden, dass das Probenaufnahmeelement (12) mittels der durch die Beleuchtungseinheit (11) erzeugbaren Primärstrahlung in einem ersten Bereich (A) und in vom ersten Bereich (A) unterschiedlichen weiteren Bereichen (B) bestrahlbar ist.

## Beschreibung

Die Erfindung betrifft einen Laborautomaten zur Bearbeitung einer Probe sowie ein Verfahren zur Bearbeitung einer Probe gemäss dem Oberbegriff der unabhängigen Ansprüche.

Bei der Verarbeitung einer Vielzahl von Proben muss eine Vielzahl von Bearbeitungsschritten durchgeführt werden. Hierzu werden in der Regel Laborautomaten verwendet, da ein präzises Pipettieren von Reagenzien in und aus Behältern wie Mikrotitrierplatten gewährleistet werden muss.

Die Laborautomaten des Standes der Technik umfassen hierbei in der Regel einen Behandlungsraum, in welchen die Proben in Mikrotitrierplatten (oder andere Behälter) eingebracht werden; eine Pipettiervorrichtung zur Durchführung der Bearbeitungsschritte; eine Bewegungseinrichtung zur Bewegung der Pipettiervorrichtung im Behandlungsraum und eine elektronische Steuereinrichtung, welche die Pipettiervorrichtung und andere Teile des Laborautomat zur Durchführung der Bearbeitungsschritte steuert und anweist.

Durch die Laborautomaten wird also ein automatisierter Probenverarbeitungsprozess mit erhöhter Effizienz und verbessertem Durchsatz gewährleistet. Eine verbesserte Ausführung eines Laborautomaten ist beispielsweise in der EP 3894871 B1 gezeigt.

Oft weisen die Laborautomaten auch integrierte optische Detektionsvorrichtungen zur Analyse der Proben auf.

Besonders bevorzugt werden Laborautomaten in der Biochemie zur Verarbeitung von biologischen Proben, wie Biomolekülen (zum Beispiel DNS oder RNS) verwendet, etwa für molekularbiologische und biochemische Analysen, Sequenzierungsvorbereitungen, Zellkulturanalysen oder immunologische Tests (z. B. ELISA).

Laborautomaten haben daher einen grossen Anwendungsbereich beispielsweise in der klinischen Diagnostik, in der pharmazeutischen Forschung (z. B. Wirkstoff-Screening), der forensischen Analytik, der Lebensmittel- und Umweltanalytik oder zur Material- und Oberflächenforschung.

Insbesondere bei Biomolekülen ist die Lumineszenzspektroskopie eine wichtige Analysemethode, bei welcher das Emissionslicht, welches auf Basis einer Photonenabsorption der Biomoleküle entsteht, ausgewertet wird.

An grosse Biomoleküle können hierfür durch eine Fluoreszenzmarkierung fluoreszierende chemische Gruppen angehängt werden, die dann als Marker für dieses Biomolekül dienen.

Unter Fluoreszenz ist dabei die kurzzeitige, spontane Emission von Licht zu verstehen, welche bei einem Übergang eines elektronisch angeregten Systems zurück in einen Zustand niedrigerer Energie erfolgt. Fluoreszenz ist also eine Form der Lumineszenz, bei der die Anregung durch Absorption von Photonen (Photolumineszenz) erfolgt. Formal stellt die Fluoreszenz somit die Umkehr der Adsorption von Licht dar, bei welcher eine Desaktivierung angeregter Elektronenzustände durch Re-Emission der Anregungsenergie als Strahlung erfolgt.

Bei vielen Prozessen spielt insbesondere die Konzentration der fluiden Proben (also der relevanten Moleküle in Lösung) für die weitere Verarbeitung eine Rolle, welche insbesondere durch die Fluoreszenzspektroskopie einfach zu bestimmen ist.

Im Stand der Technik werden Beleuchtungseinheiten dazu verwendet, Bereiche oder Teilbereiche einer zu untersuchenden Probe zu beleuchten bzw. zu bestrahlen.

Besonders häufig erfolgt dies bei Mikroskopen und Binokularen, wie in der DE102007029894A1 und der DE102009028149A1 gezeigt.

Wie vorangehend bereits erwähnt wird ein verbesserter Laborautomat zur Bearbeitung einer Probe bereits in der EP3894871 offenbart.

Ein Nachteil bei den aus dem Stand der Technik bekannten Laborautomaten ist die Beleuchtung der zu untersuchenden Probe. Im Stand der Technik erfolgt diese von oben, was die Analyse der Probe erschwert. Soll etwa eine Strahlung durch die Probe, insbesondere die gesamte Probe, gesendet werden, um letztere zu analysieren, muss der Analyseteil des Laborautomaten auf der Unterseite der Probe angeordnet werden. Eine solche Anordnung geht jedoch mit einem komplizierten Aufbau einher, insbesondere, wenn mehrere Proben im Laborautomaten bearbeitet werden sollen. Alternativ muss die Probe in eine Analysevorrichtung eingebracht werden, was einen zusätzlichen aufwendigen Bearbeitungsschritt darstellt. Derartige Aufbauten sind jedoch komplexer, unflexibler und ermöglichen keine effiziente Verarbeitung.

Die Aufgabe der vorliegenden Erfindung ist es also eine Vorrichtung für die Beleuchtung von Proben bereitzustellen, der die aus dem Stand der Technik bekannten Nachteile beseitigt, insbesondere einen Laborautomat zur Bearbeitung einer Probe so zu verbessern, dass die Analyse von Proben einfacher und effizienter erfolgt.

Diese Aufgabe wird erfindungsgemäss durch einen Laborautomat zur Bearbeitung einer Probe und ein Verfahren zur Bearbeitung einer Probe mit einem Laborautomat mit den Merkmalen der unabhängigen Ansprüche gelöst.

Die abhängigen Ansprüche beziehen sich auf besonders vorteilhafte Ausführungsformen der Erfindung.

Erfindungsgemäss wird ein Laborautomat zur Bearbeitung einer Probe mit einem Behandlungsraum zur Bearbeitung der Probe, einem in dem Behandlungsraum angeordneten Probenaufnahmeelement zur Aufnahme der Probe und einer Beleuchtungseinheit vorgeschlagen.

Das Probenaufnahmeelement kann dabei an der Beleuchtungseinheit zur Bestrahlung der Probe, insbesondere einer fluiden Probe, mit einer Primärstrahlung angeordnet werden. Zudem umfasst der Laborautomat eine in dem Behandlungsraum angeordnete Analyseeinheit zur Analyse der Probe. Die Analyse kann dabei durch Aufnahme einer von der Probe stammenden und durch die Primärstrahlung induzierten Sekundärstrahlung erfolgen. Das Probenaufnahmeelement kann erfindungsgemäss zumindest teilweise derart über der Beleuchtungseinheit angeordnet werden, dass das Probenaufnahmeelement (beziehungsweise eine darin angeordnete Probe / angeordnete Proben) mittels der durch die Beleuchtungseinheit erzeugbaren Primärstrahlung in einem ersten Bereich und in vom ersten Bereich unterschiedlichen weiteren Bereichen bestrahlbar ist. Diese Bereiche können sich dabei überschneiden oder aber auch gänzlich voneinander getrennt sein und die Bereiche können gleichzeitig oder nacheinander bestrahlt werden. Insbesondere kann das Probenaufnahmeelement auf der Beleuchtungseinheit angeordnet werden. Die Beleuchtungseinheit kann dabei verschiedene Wellenlängen oder Wellenlängenbereiche als Primärstrahlung ausstrahlen.

Die erfindungsgemässe Anordnung hat den Vorteil, dass bestimmte Bereiche des Probenaufnahmeelements und damit auch der Probe gezielt individuell und unabhängig angestrahlt werden können. D.h. es kann entweder nur ein bestimmter Bereich einer einzigen Probe, nur eine bestimmte Vielzahl von Proben oder eine einzige Probe selektiv bestrahlt werden. Insbesondere kann durch die erfindungsgemässe Vorrichtung eine Bestrahlung von unten erfolgen, sodass die Analyse der Probe mittels Anordnung der Analyseeinheit an einer beliebigen zugänglichen Stelle flexibel erfolgen kann.

Ausserdem lässt sich die Flexibilität des Laborautomaten steigern, da Proben die sich etwa in Masse, Volumen oder Dichte unterscheiden individuell bearbeitet werden können, ohne den Aufbau des Laborautomaten im Inneren ändern zu müssen. Zusätzlich erlaubt die Beleuchtung der Probe von unten, gleichbedeutend mit dem Senden einer Strahlung durch die gesamte Probe, dass die Analyse der Probe durch ein seitlich und / oder oberhalb der Probe angebrachte und / oder anordnenbare Analyseeinheit durchgeführt werden kann. Insbesondere bei der Analyse einer Vielzahl von Proben im Laborautomaten wird durch diese Vorrichtung der Aufbau vereinfacht, weil die Bewegung der Analyseeinheit zwischen den einzelnen zu analysierenden Proben so einfacher erfolgen kann. Trotzdem kann in diesem erfindungsgemässen Laborautomaten gewährleistet werden, dass die Probe ausreichend bestrahlt wird, um alle notwendigen Details sichtbar bzw. durch die Analyseeinheit detektierbar zu machen.

Die Analyse kann hierbei insbesondere in der Zellanalytik verwendet werden, etwa zum Tracken von Zellen, Markern, Bio- und / oder Makromolekülen. Ausserdem erlaubt die Analyse das Beobachten und Auswerten des Wachstums von Zellen, Bio- und / oder Makromolekülen.

Die Bestrahlung von verschiedenen Bereichen des Probenaufnahmeelements kann dabei durch eine Beleuchtung aus unterschiedlichen Richtungen erfolgen.

Im Rahmen dieser Erfindung kann unter dem Begriff «Probe» insbesondere eine fluide Probe verstanden werden, welche eine Flüssigkeit mit Substanzen wie Biomolekülen (unter anderem DNS, RNS, Nukleinsäuren, Proteine, Zellen und Zellbestandteile, Monomere) oder anderen chemischen Substanzen umfasst. Eine Flüssigkeit kann im Rahmen der Erfindung ein geeignetes Lösungsmittel sein.

Der erfindungsgemässe Laborautomat kann zudem über eine Probenbearbeitungsvorrichtung zur Aufnahme und Abgabe eines Fluids verfügen, die im Behandlungsraum angeordnet ist. Die Probenbearbeitungsvorrichtung kann dabei insbesondere als eine Pipettiervorrichtung zur Aufnahme und Abgabe eines Fluids ausgestaltet sein. Die Probenverarbeitungsvorrichtung kann dabei zur Aufnahme einer Pipettenspitze ausgebildet sein, bevorzugt zu einer fluiddichten Aufnahme der Pipettenspitze. Die Probe kann durch Pipettieren mittels einer Pipettiervorrichtung zur Aufnahme und Abgabe eines Fluids in das Probenaufnahmeelement überführt werden. Das Probenaufnahmeelement mit der darin enthaltenen Probe kann dann dergestalt im Laborautomaten über der Beleuchtungseinheit angeordnet werden, dass die Probe von unten beleuchtbar bzw. bestrahlbar ist. Das Probenaufnahmeelement kann dabei insbesondere eine Pipettenspitze sein. Ebenso kann das Probenaufnahmeelement zur Aufnahme einer Pipettenspitze ausgestaltet sein. So können in verschiedenen Bearbeitungsschritten Fluide pipettiert werden. Im Rahmen dieser Anmeldung ist jedoch auch die Analyse mittels des Analyseeinheit ein Bearbeitungsschritt.

Die Bestrahlung kann dabei von direkt unterhalb der Probe erfolgen sowie von seitlich unterhalb der Probe erfolgen oder auch seitlich von der Probe erfolgen. Dies hat den Vorteil, dass die relative Anordnung der Analyseeinheit und der Beleuchtungseinheit zueinander und die Anordnung der Analyseeinheit und der Beleuchtungseinheit um das Probenaufnahmeelement dergestalt angepasst werden können, dass sie auf die jeweiligen Eigenschaften der zu analysierenden Probe, der Anordnung des Probenaufnahmeelementes und / oder des gewählten Analyseverfahrens angepasst werden können. Auf diese Weise wird die Flexibilität des erfindungsgemässen Laborautomaten erhöht und eine schnellere Arbeitsweise ermöglicht.

In einem bevorzugten Ausführungsbeispiel des Laborautomaten umfasst die Beleuchtungseinheit ein Beleuchtungselement. Das Beleuchtungselement ist dabei derart in der Beleuchtungseinheit bewegbar, dass das Probenaufnahmeelement mittels der durch die Beleuchtungseinheit erzeugbaren Primärstrahlung in dem ersten Bereich und in den vom ersten Bereich unterschiedlichen weiteren Bereichen bestrahlbar ist.

Dies hat den Vorteil, dass die Probe gezielt angestrahlt werden kann. Gleichzeitig kann die Probe so aus unterschiedlichen Richtungen bestrahlt werden, wodurch sich die Qualität der erhobenen Daten erhöhen lässt beziehungsweise Vergleichsmessungen durchgeführt werden können. Zudem ist es möglich auf diese Weise sehr gezielt einzelne Abschnitte zu bestrahlen, sodass weniger Energie verbraucht wird als durch die aus dem Stand der Technik bekannten Beleuchtungseinheiten. Auch können auf diese Weise mehrere Proben angestrahlt werden, falls eine Vielzahl von ihnen im Laborautomaten angeordnet ist. Darüber hinaus ist bei diesem Ausführungsbeispiel lediglich ein Beleuchtungselement notwendig, während im Stand der Technik mehrere Beleuchtungselemente verwendet werden, um die gesamte Grösse des Probenaufnahmeelements auszuleuchten. Diese Mehrfachbereitstellung ist kosten- und wartungsintensiv. Da das vorliegende Beleuchtungselement jedoch in der Beleuchtungseinheit bewegbar ist, ist lediglich ein Beleuchtungselement notwendig. Folglich lassen sich so gegenüber dem Stand der Technik Material- und Wartungskosten sparen. Ausserdem ermöglicht die Anordnung der Beleuchtungseinheit unter der Probe eine platzsparende Anordnung im Laborautomaten, sodass eine kompaktere Bauweise ermöglicht wird.

In einem bevorzugten Ausführungsbeispiel des Laborautomaten umfasst die Beleuchtungseinheit ein Beleuchtungselement, wobei das Beleuchtungselement eine Vielzahl von Lichtquellen umfasst, welche derart ansteuerbar sind, dass das Probenaufnahmeelement mittels der durch die Beleuchtungseinheit erzeugbaren Primärstrahlung in dem ersten Bereich und in den vom ersten Bereich unterschiedlichen weiteren Bereichen bestrahlbar ist.

Dies hat den Vorteil, dass die Probe oder die Proben gezielt angestrahlt werden können. Ebenso ist es möglich die Probe oder die Proben gezielt, individuell und abschnittsweise anzustrahlen. Neben der erhöhten Flexibilität des Laborautomaten kann hiermit die Fehlerrate bei Messungen und Beobachtungen reduziert werden. Gleichzeitig kann die Probe so aus unterschiedlichen Richtungen bestrahlt werden, wodurch sich die Qualität der erhobenen Daten erhöhen lässt.

Der Behandlungsraum kann insbesondere einen Vorratsbehälter für Proben umfassen. Dies erlaubt einerseits eine schnellere Bearbeitung von Proben, da diese Proben und die dafür vorgesehenen Aufnahmebehälter bereits innerhalb des Behandlungsraumes sind, andererseits gewährleistet es eine sicherere Aufbewahrung von potenziell gefährlichen und / oder wertvollen Proben. Des Weiteren erhöht es die Reinheit des Behandlungsraums, da dieser seltener geöffnet werden muss, um neue Proben bereitzustellen.

In einem bevorzugten Ausführungsbeispiel des Laborautomaten umfasst das Beleuchtungselement eine Deuteriumlampe, eine Wolframlampe, eine Halogenlampe und / oder eine LED. Dies hat den Vorteil, dass verschiedene Strahlungen von dem Beleuchtungselement ausgesendet werden können. Folglich können bei der Analyse der Probe unterschiedliche Wellenlängen untersucht werden, um Informationen wie z.B. etwaige Veränderungen in der Probe zu detektieren. Bevorzugt handelt es sich bei diesen Wellenlängen um das Spektrum des sichtbaren Lichts, der UV-Strahlung oder auch Röntgenstrahlung. Besonders bevorzugt ist die Beleuchtungseinheit eine Leuchtplatte (oder eine Vielzahl von Leuchtplatten), insbesondere eine LED-Leuchtplatte und / oder eine Leuchtplatte mit ansteuerbaren Pixeln.

Die Strahlung des Beleuchtungselement kann dabei auf unterschiedliche Weise zum Probenaufnahmeelement gelangen, etwa als direkte Strahlung, mittels einer Linsenoptik, mittels eines Lichtleiters, über Fasern z.B. Glasfasern oder einer Kombination daraus.

Das Beleuchtungselement kann dabei insbesondere oszillierend und/oder getriggert beziehungsweise gepulst sein. Dies bietet den Vorteil, dass die Qualität der optischen Analyse verbessert werden kann, da so die Bildschärfe erhöht werden kann, etwa für HDR-Aufnahmen. So können Änderungen besser aufgezeigt werden. Dies ist besonders dann vorteilhaft, wenn die erhaltenen Bilder kombiniert werden sollen, um die Bildqualität zu verbessern.

Zur Verbesserung der Analysequalität sind auch alle dem Fachmann bekannten Verfahren und Vorrichtungen denkbar, wie etwa Filter und Diffusoren zum Beeinflussen der Strahlung.

In einem bevorzugten Ausführungsbeispiel des Laborautomaten umfasst die Analyseeinheit eine Vielzahl von Detektoren zur Aufnahme der Sekundärstrahlung. Dies hat den Vorteil, dass die von jedem Detektor empfangenen Daten zusammen ausgewertet werden können, um etwaige Fehler oder Ungenauigkeiten in den Sensoren auszugleichen. Insbesondere können die Daten der einzelnen Sensoren über einen Mittelwert gemittelt werden, um die Belastbarkeit der Daten zu erhöhen. Da belastbarere Daten gleichbedeutend mit einem qualitativ höheren Ergebnis sind, kann so die Effizienz des Laborautomaten erhöht werden.

Da durch die Beleuchtungseinheit auch die Vielzahl von Proben bestrahlt werden kann, kann durch die Vielzahl von Detektoren auch die Beleuchtungseinheit Vielzahl von Proben gleichzeitig analysiert werden. Hieraus ergeben sich Vorteile für die Effizienz des Laborautomaten, da so mehrere Proben im gleichen Zeitraum bearbeitet werden können.

Aufgrund der flexiblen Einstellbarkeit des zu beleuchtenden Bereichs wird ausserdem eine selektive Analyse ermöglicht, da die Proben unabhängig von der Anordnung im Probenaufnahmeelement selektiv bestrahlt und analysiert werden können.

In einem bevorzugten Ausführungsbeispiel des Laborautomaten umfasst die Analyseeinheit eine Vielzahl Typen von Sensor zur Detektion von Signalen bzw. der Sekundärstrahlung. Das bedeutet, dass insbesondere die Sekundärstrahlung von den Sensoren aufgenommen werden kann, aber auch andere Informationen wie beispielsweise Temperaturveränderungen von den Sensoren aufgenommen werden können. Dies hat den Vorteil, dass mehrere verschiedene Parameter jeweils von unterschiedlichen Sensoren erfasst werden.

In einem bevorzugten Ausführungsbeispiel des Laborautomaten umfasst die Analyseeinheit ein Photometer, insbesondere ein Spektrometer, im speziellen ein Fluorometer. Es versteht sich dabei von selbst, dass die Analyseeinheit auch eine Kombination mehrere oder aller dieser Detektoren umfassen kann.

In einem bevorzugten Ausführungsbeispiel des Laborautomaten zur Bearbeitung einer Probe, umfasst der Laborautomat eine in mindestens einer ersten Raumrichtung des Behandlungsraumes bewegbar angeordnete Bewegungseinrichtung, wobei die Analyseeinheit durch die Bewegungseinrichtung zur Probe bewegbar ist. Die bewegbare Analyseeinheit hat den Vorteil, dass die Probe zur Analyse nicht bewegt werden muss. Dies ist gerade dann vorteilhaft, wenn Prozesse in einer wässrigen Lösung untersucht werden. Da der Transport der Probe in einer wässrigen Lösung dazu führen kann, dass die untersuchten Ziele, wie etwa Zellen oder Makromoleküle, durch äussere Einflüsse bewegt werden, können durch diesen die Analyseergebnisse verfälscht werden. Dieses Risiko wird durch die Bewegung der Analyseeinheit hin zur Probe minimiert.

In einem bevorzugten Ausführungsbeispiel des Laborautomaten kann die Bewegungseinrichtung in einer zweiten, zur der ersten Raumrichtung orthogonalen Raumrichtung des Behandlungsraumes sowie in einer dritten, zur der ersten Raumrichtung und der zweiten Raumrichtung orthogonalen, Raumrichtung des Behandlungsraumes bewegt werden.

Dadurch kann die Analyseeinheit noch exakter und individuell an die jeweiligen Erfordernisse der Probe, wie etwa die Beleuchtungsrichtung oder die physische Form des Probenaufnahmeelements angepasst werden. Dies führt zu belastbareren Daten und einer effizienteren und damit schnelleren Bearbeitung der einzelnen Proben, aufgrund leichter einstellbarer Parameter, wie etwa Abstand und Beleuchtungsrichtung.

In einem bevorzugten Ausführungsbeispiel umfasst der Laborautomat eine elektronische Steuereinrichtung zur Steuerung des Beleuchtungselements. Die Steuereinrichtung ist dabei mit der Bewegungseinrichtung und der Analyseeinheit dergestalt signalverbunden; dass die vom Beleuchtungselement ausgesendete Primärstrahlung als Sekundärstrahlung auf die Analyseeinheit trifft. Dies hat den Vorteil, dass die ausgehende Primärstrahlung exakt und individuell, ohne überflüssiges Streulicht zu erzeugen, auf die Probe beziehungsweise das Probenaufnahmeelement gerichtet werden kann. So kann beispielsweise sichergestellt werden, dass die Strahlung den Weg der geringsten Streuung nimmt, etwa, indem ein Behälter dergestalt angestrahlt wird, dass die Strahlung lediglich durch den Boden direkt in den Behälter eindringt und sich nicht durch die vertikal auf diesem Boden angebrachten Wände des Behälters bewegt und dabei stark gestreut wird.

Die Signalverbindung kann insbesondere mittels eines Kabels aber auch kabellos, etwa über Bluetooth oder Funk erfolgen.

In einem bevorzugten Ausführungsbeispiel des Laborautomaten umfasst die Analyseeinheit ein Infrarotphotometer zur optischen Temperaturmessung und / oder eine Kamera zur Analyse der Probe. Die Kamera kann dabei insbesondere die Wellenlängen des sichtbaren Lichts, UV-Licht und Röntgenstrahlung aber auch andere Strahlung wahrnehmen und aufnehmen. Auf diese Weise können zum einen verschiedene Wellenlängen hinsichtlich Informationen über die Probe und die chemischen und / oder biologischen Vorgänge in deren Inneren erhoben werden. Zum anderen können diese Vorgänge aufgezeichnet werden, um sie falls nötig erneut auszuwerten. Gerade im Hinblick auf die sich ständig verbessernden Auswertungsprogramme ist es von Vorteil, wenn die Vorgänge wiederholt analysiert werden können, ohne den gesamten Prozess erneut im Labor aufzubauen und zu durchlaufen.

In einem bevorzugten Ausführungsbeispiel eines Laborautomat ist die Beleuchtungseinheit abnehmbar an einer Innenseite und / oder einer Aussenseite des Behandlungsraums anbringbar. Der Behandlungsraum wird dabei von einem transparenten, d.h. lichtdurchlässigen Material gebildet. Wobei die Beleuchtungseinheit sich bevorzugt über die gesamte Aussenseite und / oder Innenseite des Behandlungsraumes erstreckt. Dies hat den Vorteil, dass die Beleuchtungsrichtung der Probe bzw. des Probenaufnahmeelements individuell an die zu untersuchende Probe angepasst werden kann. Dies erhöht die Flexibilität und ermöglicht es die Qualität der erhobenen Daten zu erhöhen. Insbesondere die Anordnung der Beleuchtungseinheit über die gesamte Aussenseite und / oder Innenseite erhöht die Flexibilität, da sie es erlaubt, die Probe nicht nur aus allen Richtungen einzeln anzustrahlen, sondern dies auch gleichzeitig mit mehreren Lichtquellen der Beleuchtungseinheit möglich ist. Zusätzlich ist es so möglich störendes Licht von ausserhalb des Behandlungsraumes zu hemmen, sodass das Licht im Inneren des Behandlungsraumes und damit die Beleuchtung der Probe besser kontrolliert werden kann. Ein weiterer Vorteil ist hier, dass weniger starkes Licht zur Beleuchtung verwendet werden muss, da gegen weniger Einflüsse von aussen angearbeitet werden muss.

Ebenso ist es denkbar, dass die Beleuchtungseinheit frei im Behandlungsraum angeordnet ist. Dies ist besonders dann von Vorteil, wenn lediglich kleine Probenaufnahmeelemente verwendet werden. Hier ist die Verwendung von Beleuchtungseinheiten ausreichen, die keine grossen Flächen abdecken, und so Material sparen. Weiterhin kann die freie Anordnung im Behandlungsraum vorteilhaft sein, wenn der Behandlungsraum, etwa durch äussere Einflüsse bedingt, sehr klein oder eng ist und somit nur wenige mögliche Plätze für die Anordnung der Beleuchtungseinheit zur Verfügung stehen. Eine Anordnung in einem Raum ausserhalb des Behandlungsraums ist ebenfalls denkbar.

Weiterhin ist es denkbar, die Beleuchtungseinheit beweglich, analog zum Probenbehälter, in dem Behandlungsraum anzuordnen. Die bewegliche Beleuchtungseinheit ist dabei dergestalt mit dem beweglichen Probenbehälter und / oder der Steuereinrichtung signalverbunden, dass die Beleuchtungseinheit dem Probenbehälter folgen kann und der Probenbehälter so optimal angestrahlt wird. Auf diese Weise können Beleuchtungselemente und damit Material eingespart werden, ohne, dass die Qualität der erhobenen Daten verringert wird.

Die Bewegung der Beleuchtungseinheit kann dabei mittels eines Greifers, bevorzugt eines automatisierten Greifers, erfolgen.

Die Beleuchtungseinheit kann dabei insbesondere mit einem Energiespeicher, etwa einem Akku, ausgestaltet sein, sodass die Beleuchtungseinheit an verschiedenen Positionen im Behandlungsraum angeordnet werden kann. Zum Aufladen des Energiespeichers ist es denkbar, dass der Behandlungsraum über mindestens eine Andockstelle verfügt, an der die Beleuchtungseinheit und/oder der Energiespeicher angedockt und/oder geladen und/oder ausgetauscht werden kann.

Es ist ebenfalls offenbart, dass die Beleuchtungseinheit mittels des Greifers ausserhalb des Behandlungsraums angeordnet werden kann. Die Andockstellen können hierfür ebenfalls ausserhalb des Behandlungsraums angeordnet werden. Es ist zudem weiterhin möglich, Andockstellen bereitzustellen, die eine Signalverbindung zwischen dem Beleuchtungselement und dem Laborautomaten ermöglichen. Diese Signalverbindung kann dabei zusätzlich zur Aufladefunktion der Andockstelle vorhanden sein oder auch ohne die Aufladefunktion.

In einem bevorzugten Ausführungsbeispiel des Laborautomaten bildet die Beleuchtungseinheit eine den Behandlungsraum umgebende Wand.

In einem bevorzugten Ausführungsbeispiel eines erfindungsgemässen Laborautomaten verfügt der Laborautomat über ein Bodenelement, auf dem das Probenaufnahmeelement angeordnet werden kann. Das Bodenelement ist dabei vollständig von der Beleuchtungseinheit gebildet, wobei die Beleuchtungseinheit eine Vielzahl von Lichtquellen umfasst, welche derart ansteuerbar sind, dass das Probenaufnahmeelement mittels der durch die Beleuchtungseinheit erzeugbaren Primärstrahlung in dem ersten Bereich und in den vom ersten Bereich unterschiedlichen weiteren Bereichen bestrahlbar ist.

Dies hat den Vorteil, dass die Probe bzw. das Probenaufnahmeelement gezielt angestrahlt werden kann, und der Laborautomat effizienter arbeiten kann.

Zusätzlich ist die Bestrahlung der Probe bzw. des Probenaufnahmeelements von unten vorteilhaft, da so die Primärstrahlung durch die Probe wandert und die emittierte Sekundärstrahlung besonders bei am oberen Ende, das heisst dem der Bodenelement entfernten Ende, offenen Probenaufnahmeelementen direkt auf die Analyseeinheit fällt, ohne eine weitere Wand des Probenaufnahmeelements durchqueren zu müssen.

Das Bodenelement kann insbesondere die Leuchtplatte sein. Die Bodenplatte kann dabei die folgenden Abmessungen (Länge X Breite X Höhe) aufweisen: 120-130mm, 80-90mm 10-12mm, bevorzugt 125-130mm, 83-88mm, 12-17mm, besonders bevorzugt 127,076 mm, 85,48mm, 14,35mm.

In einem bevorzugten Ausführungsbeispiel kann die Beleuchtungseinheit an die Form des Probenaufnahmeelements angepasst werden, insbesondere an die äussere Form, um so eine möglichst zielgenaue Bestrahlung des Probenaufnahmeelements zu ermöglichen.

In einem bevorzugten Ausführungsbeispiel verfügt der Laborautomat über eine Wärmequelle, insbesondere über eine Wärmequelle die am und/oder im Beleuchtungselement anordnenbar ist, so dass eine Kombination von Lichtquelle und Wärmequelle bildbar ist. Dies wird im Folgenden als Licht- und Heizelement bezeichnet. Das Licht- und Heizelement kann über eine separate Lichtquelle und eine separate Wärmequelle verfügen und / oder über eine kombinierte Licht-Wärmequelle.

Es ist vorstellbar, dass die Wärmequelle dabei ebenfalls derart ansteuerbar ist, dass das Probenaufnahmeelement in dem ersten Bereich und in den vom ersten Bereich unterschiedlichen weiteren Bereichen erwärmbar ist.

Die gezielte Erwärmung kann dabei mit Mitteln analog zu der gezielten Bestrahlung erfolgen, also etwa durch eine Vielzahl von einzeln ansteuerbaren Wärmequellen und/oder durch bewegbare Wärmequellen und/oder einzeln ansteuerbaren Heizelementen und/oder bewegbaren Heizelementen, die zusammen die Wärmequelle bilden.

Das gezielte Erwärmen bietet dabei den Vorteil, dass wärmeabhängige Analysen und Methoden, wie etwa eine PCR oder andere isotherme Amplifikationen vorgenommen werden können.

Um die Genauigkeit solcher Analysen und Methoden zu erhöhen, ist es denkbar, dass das Heizelement und/oder die Wärmequellen über ein Temperaturmesselement, etwa ein Thermometer verfügen. Dieses Temperaturmesselement kann dabei mit dem Laborautomaten signalverbunden und steuerbar sein, insbesondere Bewegungsgesteuert sein.

Ausserdem wird ein erfindungsgemässes Verfahren zur Bearbeitung einer Probe mit einem Laborautomat vorgeschlagen, welches die folgenden Schritte umfasst. Bereitstellen eines Laborautomat, einbringen der Probe in den Behandlungsraum. Bestrahlen der Probe mit der Beleuchtungseinheit und analysieren der Probe mit der Analyseeinheit. Die Aufnahme der Analyseeinheit mittels der Bewegungsvorrichtung, Bewegen der Analyseeinheit mittels der Bewegungseinrichtung durch den Behandlungsraum zu der Probe und das Analysieren der Probe mittels der Analyseeinheit.

Dies hat den Vorteil, dass der Laborautomat schneller und effizienter arbeiten kann. Nicht nur, weil die Probe oder Proben und die Analyseeinheit so schnell und effizient genau zueinander positioniert werden können, sondern auch, weil die Probe nicht händisch von einem Mitarbeiter bewegt werden muss. Dadurch wird einerseits das Risiko eines Verschüttens reduziert, andererseits wird so die Qualität der Probe und damit der erhobenen Daten nicht durch mögliche Kontamination durch den Mitarbeiter verringert. Alles zusammen führt also zu einem sichereren, schnelleren und effizienteren Arbeitsablauf.

In einem erfindungsgemässen Ausführungsbeispiel des Verfahrens wird dabei durch die Position der Analyseeinheit der von der Primärstrahlung bestrahlte Bereich des Probenaufnahmeelements bestimmt. Dies erfolgt darüber, dass die Steuereinrichtung mit der Analyseeinheit und dem Probenaufnahmeelement signalverbunden ist und so die relative Position der beiden zueinander bestimmen kann. Darüber hinaus ist die Steuereinrichtung auch mit der Beleuchtungseinheit signalverbunden, sodass die Steuereinrichtung die Beleuchtungseinheit steuern kann.

Es versteht sich von selbst, dass die hier genannten Ausführungsbeispiele keinen beschränkenden Charakter haben und die verschiedenen Merkmale der Ausführungsbeispiele sowie die Ausführungsbeispiele selbst miteinander kombinierbar sind.

Im Folgenden wird die Erfindung anhand von Ausführungsbeispielen unter Bezugnahme auf die Zeichnungen näher erläutert. Die Zeichnungen zeigen:
- Fig. 1:: eine schematische Darstellung eines aus dem Stand der Technik bekannten Mikroskops mit Beleuchtungseinheit;
- Fig. 2:: eine schematische Darstellung eines aus dem Stand der Technik bekannten Laborautomaten;
- Fig. 3:: eine schematische Darstellung eines erfindungsgemässen Laborautomaten mit einem Beleuchtungselement;
- Fig. 4:: eine schematische Darstellung einer beweglichen Beleuchtungseinheit;
- Fig. 5: eine schematische Darstellung einer Beleuchtungseinheit mit einer Vielzahl von Lichtquellen;
- Fig. 6:: eine schematische Darstellung der Raumrichtungen X, Y und Z;
- Fig 7: eine schematische Darstellung eines Laborautomaten mit einer die Aussenseite des Behandlungsraums bedeckenden Beleuchtungseinheit;
- Fig. 8: eine schematische Darstellung eines Laborautomaten mit einem Bodenelement.

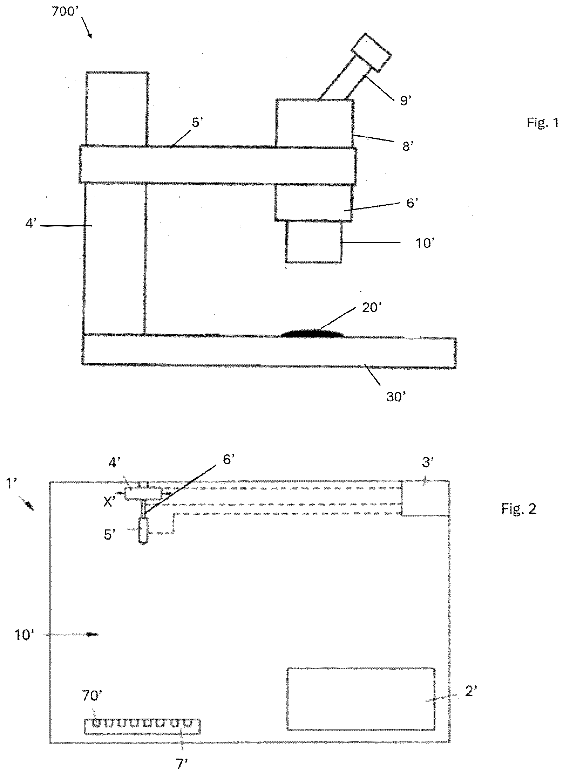

In Figur 1 ist ein Mikroskop zur Untersuchung einer Probe bzw. eines Objekts 20' in einer Querschnittsansicht schematisch dargestellt und insgesamt mit 700' bezeichnet. Das Mikroskop weist einen Mikroskopkörper 4' auf, auf dem ein Mikroskoptisch 30'angeordnet ist. Die Probe 20' ist auf dem Mikroskoptisch 30' positioniert. An einer Objektivhalterung 6' ist ein Objektiv 10' vorgesehen. Zur Beleuchtung der Probe 20' ist u. a. eine, im Folgenden nicht näher erläuterte, Auflicht-Beleuchtungseinrichtung 5' vorgesehen. Weiterhin ist das Mikroskop 700' mit der Ausgestaltung 400' der Beleuchtungseinrichtung ausgestattet.

Das von der Probe 20' reflektierte Beleuchtungslicht erreicht im Beobachtungsstrahlengang über einen Tubus 8' das Okular 9'.

Figur 2 zeigt eine schematische Darstellung eines aus dem Stand der Technik bekannten Laborautomaten 1.

Der Laborautomat 1' zur Bearbeitung einer fluiden Probe 70' umfasst einen Behandlungsraum 10' zur Aufnahme der fluiden Probe 70' und eine in dem Behandlungsraum 10' angeordnete Probenbearbeitungsvorrichtung 6' zur Durchführung mindestens eines Bearbeitungsschrittes an der Probe 70'. Zudem ist ein Vorratsbehälter 2' für Proben 70' im Behandlungsraum 10' angeordnet.

Figur 2 zeigt darüber hinaus ein in dem Behandlungsraum 10' angeordnetes Probenaufnahmeelement 7' zur Aufnahme der Probe 70', eine Beleuchtungseinheit 11', wobei das Probenaufnahmeelement 7' an der Beleuchtungseinheit 11' zur Bestrahlung der Probe 70' mit einer Primärstrahlung angeordnet werden kann.

Ausserdem ist eine Bewegungseinrichtung 4' im Behandlungsraum 10' angeordnet. Die Bewegungseinrichtung 4' ist zumindest in einer ersten Raumrichtung x' des Behandlungsraumes 10' bewegbar. Dabei ist die Bewegungseinrichtung 4' derart mit der Probenbearbeitungsvorrichtung 6' verbunden (also die Probenbearbeitungsvorrichtung 6' derart in der Bewegungseinrichtung 4' umfasst), dass die Probenbearbeitungsvorrichtung 6 mittels der Bewegungseinrichtung 4' in der ersten Raumrichtung x' durch den Behandlungsraum 10' bewegbar ist.

Ausserdem umfasst der Laborautomat 1' eine elektronische Steuereinrichtung 3', welche mit der Probenbearbeitungsvorrichtung 6', der Bewegungseinrichtung 4' und der Analyseeinheit 5' signalverbunden ist. Die Signalverbindung wird hierbei über die gestrichelten Linien angedeutet.

Die Steuereinrichtung 3' kann im Betriebszustand also Steuersignale zur Durchführung verschiedener Bearbeitungsschritte an die Probenbearbeitungsvorrichtung 6', die Bewegungseinrichtung 4' und die Analyseeinheit 5' senden. Selbstverständlich kann die Steuereinrichtung 3' auch Signale von der Probenbearbeitungsvorrichtung 6', der Bewegungseinrichtung 4' und die Analyseeinheit 5' empfangen.

Die Signalverbindung erfolgt bei der Probenbearbeitungsvorrichtung 6' und / oder der Bewegungseinrichtung 4' über eine Kabelverbindung zur Steuereinheit 3'. Bei der Analyseeinheit 5' ist die Signalverbindung kabellos. Die Daten- / Signalübertragung erfolgt also über einen freien Raum (Luft bzw. Vakuum) als Übertragungsmedium. Zur Übertragung wird elektromagnetische Strahlung wie Bluetooth oder WLAN verwendet.

Die Analyseeinheit 5' wird durch die Steuereinrichtung 3' gesteuert, sodass Analysen an einer Probe 70' durchgeführt werden können, die in einem im Behandlungsraum 10' angeordneten Probenaufnahmeelement 7' durchgeführt werden. Der in Fig. 2 gezeigte Laborautomat stimmt in den oben beschriebenen Merkmalen und der Probenverarbeitung mit dem erfindungsgemässen Laborautomaten überein, weshalb diese grundlegende Funktion des letzteren unten nicht erneut erläutert wird.

Im Gegensatz zur vorliegenden Erfindung erfolgt beim Laborautomaten aus dem Stand der Technik keine gezielte, individuelle Beleuchtung der Probe oder Proben 70' von unten bzw. seitlich von unten. Die flexible Anordnung der Analyseeinheit 5 nach dem erfindungsgemässen Laborautomaten und die sich daraus ergebenden Vorteile ist hier ebenfalls nicht gezeigt.

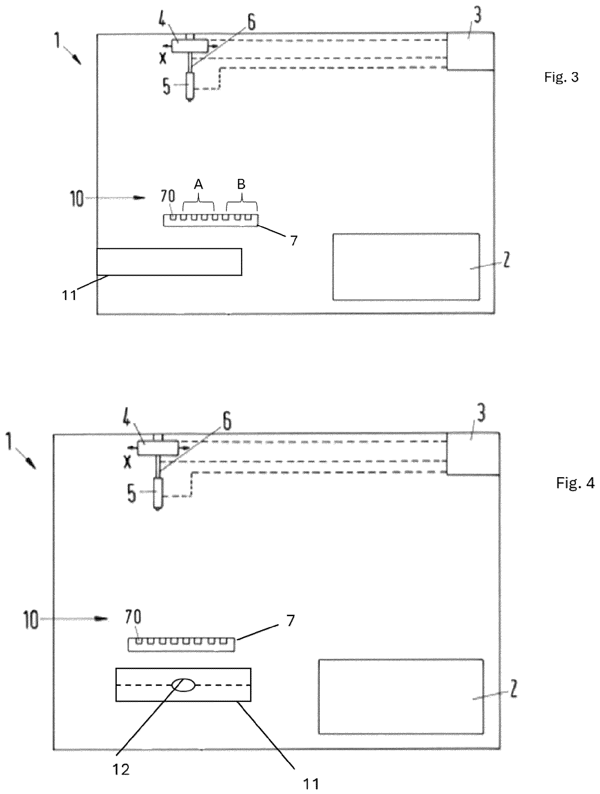

Figur 3 zeigt eine schematische Darstellung eines erfindungsgemässen Laborautomaten mit einer Beleuchtungseinheit 11, wobei die Beleuchtungseinheit 11 abnehmbar an einer Innenseite des Behandlungsraums 10 angebracht ist.

Der in Figur 3 gezeigte Laborautomat stimmt im Wesentlichen mit dem in Figur 2 gezeigten Laborautomaten überein. Daher wurden die dortigen Bezugszeichen lediglich durch Bezugszeichen ohne Hochkommata ersetzt.

Darüber hinaus verfügt der Laborautomat nach Figur 3 zusätzlich über eine in dem Behandlungsraum 10 angeordnete Analyseeinheit 5 zur Analyse der Probe 70, durch Aufnahme einer von der Probe 70 stammenden und durch die Primärstrahlung induzierten Sekundärstrahlung, wobei das Probenaufnahmeelement 7 zumindest teilweise derart über der Beleuchtungseinheit 11 angeordnet ist, dass das Probenaufnahmeelement 7 mittels der durch die Beleuchtungseinheit 11 erzeugbaren Primärstrahlung in einem ersten Bereich A und in vom ersten Bereich A unterschiedlichen weiteren Bereichen B bestrahlt werden kann.

Figur 4 zeigt eine schematische Darstellung einer beweglichen Beleuchtungseinheit 11 in einem Laborautomaten.

Die Beleuchtungseinheit 11 des Laborautomaten umfasst dabei ein Beleuchtungselement 12. Das Beleuchtungselement 12 ist derart in der Beleuchtungseinheit 11 bewegbar, dass das Probenaufnahmeelement 7 mittels der durch die Beleuchtungseinheit 11 erzeugbaren Primärstrahlung in dem ersten Bereich und in den vom ersten Bereich unterschiedlichen weiteren Bereichen bestrahlt werden kann. Die Bewegung der Beleuchtungseinheit 11 ist dabei durch eine gestrichelte Linie schematisch dargestellt.

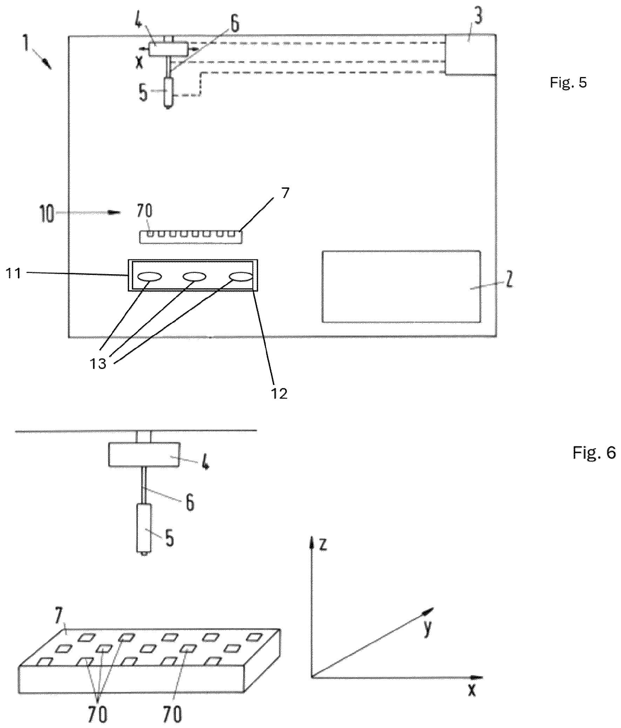

Figur 5 zeigt eine schematische Darstellung einer Beleuchtungseinheit 11 mit einer Vielzahl von Lichtquellen 13, indem die Beleuchtungseinheit 11 ein Beleuchtungselement 12 umfasst und das Beleuchtungselement 12 eine Vielzahl von Lichtquellen 13 umfasst, welche derart ansteuerbar sind, dass das Probenaufnahmeelement 12 mittels der durch die Beleuchtungseinheit 12 erzeugbaren Primärstrahlung in dem ersten Bereich und in den vom ersten Bereich unterschiedlichen weiteren Bereichen bestrahlbar ist.

In dem in Figur 5 gezeigten Laborautomaten kann das Beleuchtungselement 12 eine Deuteriumlampe, eine Wolframlampe, eine Halogenlampe und / oder eine LED sein.

Darüber hinaus weist die Analyseeinheit 5 eine Vielzahl von Detektoren (nicht gezeigt) zur Aufnahme der Sekundärstrahlung auf.

Die Analyseeinheit 5 des hier gezeigten Laborautomaten verfügt dabei über eine Vielzahl Typen von Sensor/Detektoren zur Detektion von Signalen bzw. zur Detektion der Sekundärstrahlung.

Figur 6 zeigt einen schematischen Ausschnitt eines erfindungsgemässen Laborautomaten, wobei die Bewegungseinrichtung 4 in einer zweiten, zu der ersten Raumrichtung orthogonalen Raumrichtung y des Behandlungsraumes 10 sowie in einer dritten, zu der ersten Raumrichtung x und der zweiten Raumrichtung y orthogonalen, Raumrichtung z des Behandlungsraumes 10 bewegbar ist.

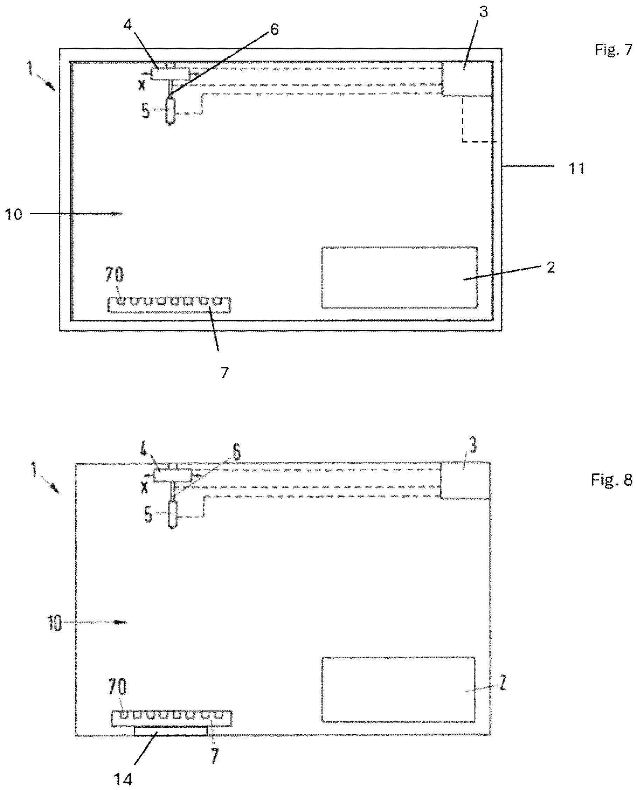

Figur 7 zeigt einen Laborautomaten 1, mit einer die Aussenseite des Behandlungsraums 10 umgebende Wand, wobei die Beleuchtungseinheit 11 die den Behandlungsraum 10 umgebende Wand bildet. Darüber hinaus umfasst der gezeigte Laborautomat 1 eine elektronische Steuereinrichtung 3 zur Steuerung des Beleuchtungselements 12, wobei die Steuereinrichtung 3 mit der Bewegungseinrichtung 4 und der Analyseeinheit 5 dergestalt signalverbunden ist; dass die vom Beleuchtungselement 12 ausgesendete Primärstrahlung als Sekundärstrahlung auf die Analyseeinheit 5 trifft.

Figur 7 zeigt einen Laborautomaten 1, wobei der Laborautomat über ein Bodenelement 14 verfügt, auf dem das Probenaufnahmeelement 7 angeordnet ist. Das Bodenelement 14 wird dabei vollständig von der Beleuchtungseinheit 11 gebildet, wobei die Beleuchtungseinheit 11 eine Vielzahl von Lichtquellen (nicht dargestellt) umfasst, welche derart ansteuerbar sind, dass das Probenaufnahmeelement 7 mittels der durch die Beleuchtungseinheit 11 erzeugbaren Primärstrahlung in dem ersten Bereich und in den vom ersten Bereich unterschiedlichen weiteren Bereichen bestrahlt werden kann.

Durch die oben erläuterten Merkmale erlaubt es die vorliegende Erfindung daher zum ersten Mal einen Laborautomaten bereitzustellen und zu verwenden, der über eine Beleuchtungseinheit verfügt, die dergestalt gezielt angesteuert werden kann, dass sie ein Probenaufnahmeelement bzw. die darin enthaltene Probe zielgenau und abschnittsweise bestrahlen kann.

Dadurch kann die Qualität der Probenuntersuchung gesteigert werden, weil die Beleuchtung dort erfolgt, wo sie vonnöten ist, und gleichzeitig so gesteuert werden kann, dass weniger Streulicht oder gar eine Überbelichtung erzeugt wird.

Durch die gemeinsame Steuerung der Analyseeinheit, der Beleuchtungseinheit und der Bewegungseinheit durch die Steuereinrichtung kann zudem gewährleistet werden, dass die relative Anordnung der einzelnen Komponenten zueinander optimal erfolgt, sodass das bestmögliche Beleuchtungsergebnis erzielt wird.

So wird ein schnellerer und besserer und somit qualitativ hochwertigerer, Arbeitsvorgang ermöglicht.

Die Erfindung ist nicht auf die offenbarten Ausführungsformen beschränkt. Andere Variationen der offenbarten Ausführungsformen können von Fachleuten beim Praktizieren einer beanspruchten Erfindung aus einem Studium der Zeichnungen, der Offenbarung und der abhängigen Ansprüche verstanden und bewirkt werden. In den Ansprüchen schliesst das Wort "umfassend" keine anderen Elemente oder Schritte aus, und der unbestimmte Artikel "ein" oder "eine" schliesst keine Vielzahl aus. Die blosse Tatsache, dass bestimmte Massnahmen in voneinander verschiedenen abhängigen Ansprüchen wiederholt werden, bedeutet nicht, dass eine Kombination dieser Massnahmen nicht vorteilhaft verwendet werden kann. Jegliche Bezugszeichen in den Ansprüchen sollten nicht als Einschränkung des Umfangs ausgelegt werden.

## Patentansprüche

1. Laborautomat zur Bearbeitung einer Probe (70) umfassend:
• einen Behandlungsraum (10) zur Bearbeitung der Probe (70);
• ein in dem Behandlungsraum (10) angeordnetes Probenaufnahmeelement (7) zur Aufnahme der Probe (70); und
• eine Beleuchtungseinheit (11), wobei das Probenaufnahmeelement (7) an der Beleuchtungseinheit (11) zur Bestrahlung der Probe (70) mit einer Primärstrahlung angeordnet werden kann,
• eine in dem Behandlungsraum (10) angeordnete Analyseeinheit (5) zur Analyse der Probe (70), durch Aufnahme einer von der Probe (70) stammenden und durch die Primärstrahlung induzierten Sekundärstrahlung;
• **dadurch gekennzeichnet, dass**
das Probenaufnahmeelement (7) zumindest teilweise derart über der Beleuchtungseinheit (11) angeordnet werden kann, dass das Probenaufnahmeelement (7) mittels der durch die Beleuchtungseinheit (11) erzeugbaren Primärstrahlung in einem ersten Bereich (A) und in vom ersten Bereich (A) unterschiedlichen weiteren Bereichen (B) bestrahlbar ist.

2. Laborautomat nach Anspruch 1, wobei die Beleuchtungseinheit (11) ein Beleuchtungselement (12) umfasst und das Beleuchtungselement (12) derart in der Beleuchtungseinheit (11) bewegbar ist, dass das Probenaufnahmeelement (12) mittels der durch die Beleuchtungseinheit (11) erzeugbaren Primärstrahlung in dem ersten Bereich (A) und in den vom ersten Bereich (A) unterschiedlichen weiteren Bereichen (B) bestrahlbar ist

3. Laborautomat nach Anspruch 1 wobei die Beleuchtungseinheit (11) ein Beleuchtungselement (12) umfasst und das Beleuchtungselement (12) eine Vielzahl von Lichtquellen (13) umfasst, welche derart ansteuerbar sind, dass das Probenaufnahmeelement (7) mittels der durch die Beleuchtungseinheit (11) erzeugbaren Primärstrahlung in dem ersten Bereich (A) und in den vom ersten Bereich (A) unterschiedlichen weiteren Bereichen (B) bestrahlbar ist.

4. Laborautomat nach einem der vorangehenden Ansprüche, wobei das Beleuchtungselement (12) eine Deuteriumlampe, eine Wolframlampe, eine Halogenlampe und / oder eine LED ist.

5. Laborautomat nach einem der vorangehenden Ansprüche, wobei die Analyseeinheit (5) eine Vielzahl von Detektoren zur Aufnahme der Sekundärstrahlung umfasst.

6. Laborautomat nach einem der vorangehenden Ansprüche, wobei die Analyseeinheit (5) ein Photometer, insbesondere ein Spektrometer, im speziellen ein Fluorometer ist.

7. Laborautomat nach einem der vorangehenden Ansprüche, umfassend eine in mindestens einer ersten Raumrichtung (x) des Behandlungsraumes (10) bewegbar angeordnete Bewegungseinrichtung (4), wobei die Analyseeinheit (5) durch die Bewegungseinrichtung (4) aufnehmbar ist und mittels der Bewegungseinrichtung (4) zur Probe (70) bewegbar ist.

8. Laborautomat nach Anspruch 8, wobei die Bewegungseinrichtung (4) in einer zweiten, zur der ersten Raumrichtung orthogonalen Raumrichtung (y) des Behandlungsraumes (10) sowie in einer dritten, zur der ersten Raumrichtung (x) und der zweiten Raumrichtung (y) orthogonalen, Raumrichtung (z) des Behandlungsraumes (10) bewegbar ist.

9. Laborautomat nach Anspruch 8 oder 9, umfassend eine elektronische Steuereinrichtung (3) zur Steuerung des Beleuchtungselements (12), wobei die Steuereinrichtung (3) mit der Bewegungseinrichtung (4) und der Analyseeinheit (5) dergestalt signalverbunden ist; dass die vom Beleuchtungselement (12) ausgesendete Primärstrahlung als Sekundärstrahlung auf die Analyseeinheit (5) trifft.

10. Laborautomat nach einem der vorangehenden Ansprüche, wobei die Analyseeinheit (5) ein Infrarotphotometer zur optischen Temperaturmessung und / oder eine Kamera zur Analyse der Probe (70) umfasst.

11. Laborautomat nach einem der vorangehenden Ansprüche, wobei die Beleuchtungseinheit (11) abnehmbar an einer Innenseite und / oder einer Aussenseite des Behandlungsraums (10) anbringbar ist.

12. Laborautomat nach einem der vorangehenden Ansprüche wobei sich die Beleuchtungseinheit (11) über eine gesamte Aussenseite und / oder Innenseite des Behandlungsraumes (10) erstreckt.

13. Laborautomat nach einem der vorangehenden Ansprüche, wobei die Beleuchtungseinheit (11) eine den Behandlungsraum (10) umgebende Wand bildet.

14. Laborautomat nach einem der vorangehenden Ansprüche, wobei der Laborautomat über ein Bodenelement (14) verfügt, auf der das Probenaufnahmeelement (7) angeordnet werden kann, wobei das Bodenelement (14) vollständig von der Beleuchtungseinheit (11) gebildet wird und die Beleuchtungseinheit (11) eine Vielzahl von Lichtquellen (13) umfasst, welche derart ansteuerbar sind, dass das Probenaufnahmeelement (7) mittels der durch die Beleuchtungseinheit (11) erzeugbaren Primärstrahlung in dem ersten Bereich (A) und in den vom ersten Bereich (A) unterschiedlichen weiteren Bereichen (B) bestrahlbar ist.

15. Verfahren zur Bearbeitung einer Probe (70) mit einem Laborautomat (1) umfassend:
a) Bereitstellen eines Laborautomat (1) nach einem der vorangehenden Ansprüche;
b) Einbringen der Probe (70) in den Behandlungsraum (10);
c) Bestrahlen der Probe (70) mittels der Beleuchtungseinheit (11);
d) Analysieren der Probe (70) mittels der Analyseeinheit (5).

16. Verfahren nach Anspruch 15, wobei die Position der Analyseeinheit (5) den von der Primärstrahlung bestrahlten Bereich des Probenaufnahmeelements (7) bestimmt.
